(19) Europäisches Patentamt
European Patent Office
Office européen des brevets

(11) Veröffentlichungsnummer: **0 065 169**
**B1**

(12) # EUROPÄISCHE PATENTSCHRIFT

(45) Veröffentlichungstag der Patentschrift: **23.07.86**

(51) Int. Cl.⁴: **C 07 D 401/14,** C 08 K 5/34

(21) Anmeldenummer: **82103755.3**

(22) Anmeldetag: **03.05.82**

(54) **Poly-bis-triazinylaminotriazinylamine, ihre Herstellung, ihre Verwendung als Lichtschutzmittel für Kunststoffe und mit ihnen stabilisierte Kunststoffe.**

(30) Priorität: **07.05.81 DE 3117964**

(43) Veröffentlichungstag der Anmeldung: **24.11.82 Patentblatt 82/47**

(45) Bekanntmachung des Hinweises auf die Patenterteilung: **23.07.86 Patentblatt 86/30**

(84) Benannte Vertragsstaaten: **AT BE CH DE FR GB IT LI NL SE**

(56) Entgegenhaltungen:
**EP-A-0 013 665**
**EP-A-0 014 683**
**EP-A-0 029 522**
**EP-A-0 044 499**

(73) Patentinhaber: **HOECHST AKTIENGESELLSCHAFT, Postfach 80 03 20, D-6230 Frankfurt am Main 80 (DE)**

(72) Erfinder: **Wiezer, Hartmut, Dr., Am Stocket 18, D-8901 Lützelburg (DE)**
Erfinder: **Pfahler, Gerhard, Dr., Karlsbader Strasse 27, D-8900 Augsburg (DE)**

**EP 0 065 169 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Aus der Patentliteratur sind bereits zahlreiche polymer aufgebaute Polytriazinylamine bekannt (DE—A—26 36 144, 29 33 078 und 30 22 896 sowie EP—A—13 665, 14 683, 29 522 44 499). Es ist ferner beschrieben, daß diese Verbindungen als Stabilisatoren für Thermoplaste brauchbar sind. Die Produkte des Standes der Technik genügen jedoch nicht mehr in allen anwendungstechnischen Kriterien den steigenden technischen Erfordernissen.

Es wurde gefunden, daß andersartig strukturierte Poly-bistriazinylaminotriazinylamine sich gegenüber den bekannten Verbindungen durch eine überragende, in keiner Weise vorhersehbare Wirksamkeit auszeichnen. Den erfindungsgemäßen Verbindungen am nächsten kommen die Verbindungen der nicht vorveröffentlichten EP—A—53 775 (= DE—A—30 45 839), sowie der EP—A—13 665.

Die neuen Poly-bis-triazinylaminotriazinylamine werden durch die allgemeine Formel (I)

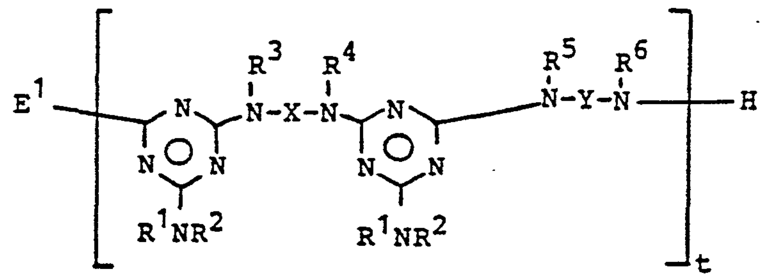
I

beschrieben, in welcher

t eine ganze Zahl von >1 bis 20 und insbesondere von 2 bis 5 bedeutet.

$R^1$ und $R^2$ sind gleich oder verschieden und stehen für eine Gruppe der Formel (II)

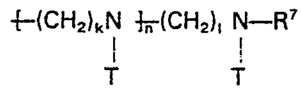
II

wobei in dieser Formel

K und l gleiche oder unterschiedliche ganze Zahlen von 2 bis 6, vorzugsweise jedoch 2 oder 3 bedeuten,

n eine ganze Zahl von 0 bis 3, vorzugsweise 0 oder 1 und insbesondere 0 darstellt und der Rest

$R^7$ für Wasserstoff, $C_1$- bis $C_{18}$-, vorzugsweise $C_1$- bis $C_{12}$- und insbesondere $C_1$- bis $C_8$-Alkyl, $C_5$- bis $C_{12}$-Cycloalkyl, $C_7$- bis $C_9$-Phenylalkyl oder eine Gruppe der Formel (IV),

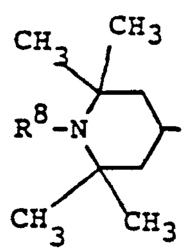
IV

ganz besonders jedoch für Wasserstoff steht und in Formel (IV)

$R^8$ gleich Wasserstoff, $C_1$- bis $C_{12}$-Alkyl, Benzyl, vorzugsweise jedoch Wasserstoff ist,

T die Bedeutung eines Restes der Formel (V)

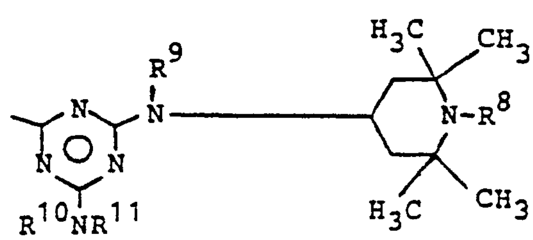
V

hat, mit $R^8$ wie angegeben und

$R^9$ und $R^{10}$ gleiche oder verschiedene Reste darstellen mit der Bedeutung von Wasserstoff, Alkyl mit zu vorzugsweise bis zu 12- und insbesondere bis zu 8 C Atomen das durch $C_1$- bis $C_{18}$-Alkoxi substituiert seins kann wobei vorzugsweise $C_2$- oder $C_3$-Alkyl durch $C_1$- bis $C_{18}$-Alkoxi, insbesondere durch $C_1$- oder $C_2$-Alkoxi substituiert ist, $C_5$- bis $C_{12}$-Cycloalkyl, das durch 1 bis 4 $C_1$- bis $C_4$-Alkyl-Gruppen, vorzugsweise Methylgruppen substituiert sein kann, Allyl, Phenyl, das durch bis zu 2 $C_1$- bis $C_8$-Alkylgruppen und/oder

durch eine OH-Gruppe substituiert sein kann, $C_7$- bis $C_{14}$-Aralkyl, vorzugsweise $C_7$- bis $C_9$-Phenylalkyl, oder einer Gruppe der Formel (IV), während.

$R^{11}$ die Bedeutung von Wasserstoff, von $C_1$- bis $C_{18}$-, vorzugsweise $C_1$- bis $C_{12}$- und insbesondere $C_1$- bis $C_8$-alkyl, von $C_5$- bis $C_{12}$-Cycloalkyl, von $C_7$- bis $C_{14}$-Aralkyl, vorzugsweise $C_7$- bis $C_9$-Phenylalkyl, oder bevorzugt von einer Gruppe der Formel (IV) hat.

$R^3$, $R^4$, $R^5$, $R^6$ sind gleiche oder verschiedene Reste $R^{11}$, wobei von den Resten $R^5$ und $R^6$ vorzugsweise einer Wasserstoff ist, insbesondere jedoch beide für Wasserstoff stehen.

X und Y sind gleich oder verschieden und besitzen die Bedeutung von $C_2$- bis $C_6$- bis $C_6$-Alkylen, von 1,3-Bis-(methylen)-cyclohexan, 2(3),5(6)-Bis-(methylen)-norbornan, 3(4),8(9)-Bis-(methylen)-tricyclo-[5,2,1,$0^{2,6}$]-decan, 2-Methylen-3,3,5-trimethyl-cyclopentyl oder 4,4'-Dicyclohexylmethan oder es können auch an Stelle der Grupperungen

```
 R3    R4            R5    R6
 |     |             |     |
—N—X—N—     oder    —N—Y— N
```

Piperazinylen-Reste, oder an Stelle der Gruppierungen

```
 R3         R4              R5
 |          |               |
—N—X—,     —N—X—,    oder  —N—Y—
```

durch bis zu vier Methylgruppen substituierte $C_5$- bis $C_9$-Aza-Monocyclo- oder -Bicycloalkylenreste treten, mit den Einschränkung, daß entweder nur X oder nur Y $C_2$- bis $C_6$-Alkylen sein darf, X and Y bevorzugt jedoch 2(3),5(6)-Bis-(methylen)-norbornan oder 3(4),8(9)-Bis-(methylen)-tricyclo[5,2,1,$0^{2,6}$]-decan sind.

$E^1$ ist ein Chloratom oder eine Gruppe der Formel

```
 R5    R6            R6    R5
 |     |             |     |
—N—Y—NH     oder    —N—Y—NH,
```

ist vorzugsweise jedoch Chlor.

Schließlich muß in Formel (I) mindestens einer der Reste $R^1$, $R^2$, $R^3$, $R^4$, $R^5$ und $R^6$ eine Gruppe der Formel (IV) sein oder diese Gruppe enthalten.

Die neuen Poly-bis-triazinylaminotriazinylamine werden ausgehend von un- oder teilsubstituierten Cyanurhalogeniden, bevorzugt -chloriden, erhalten. Die einzelnen Zwischenprodukte können isoliert werden, jedoch ist es auch möglich, die Synthese in einem sogenannten "Eintopfverfahren" ohne Isolierung der Zwischenverbindungen zu vollziehen.

Im nachfolgenden Reakationsschema wird der Syntheseweg ausgehend von Cyanurchlorid skizziert.

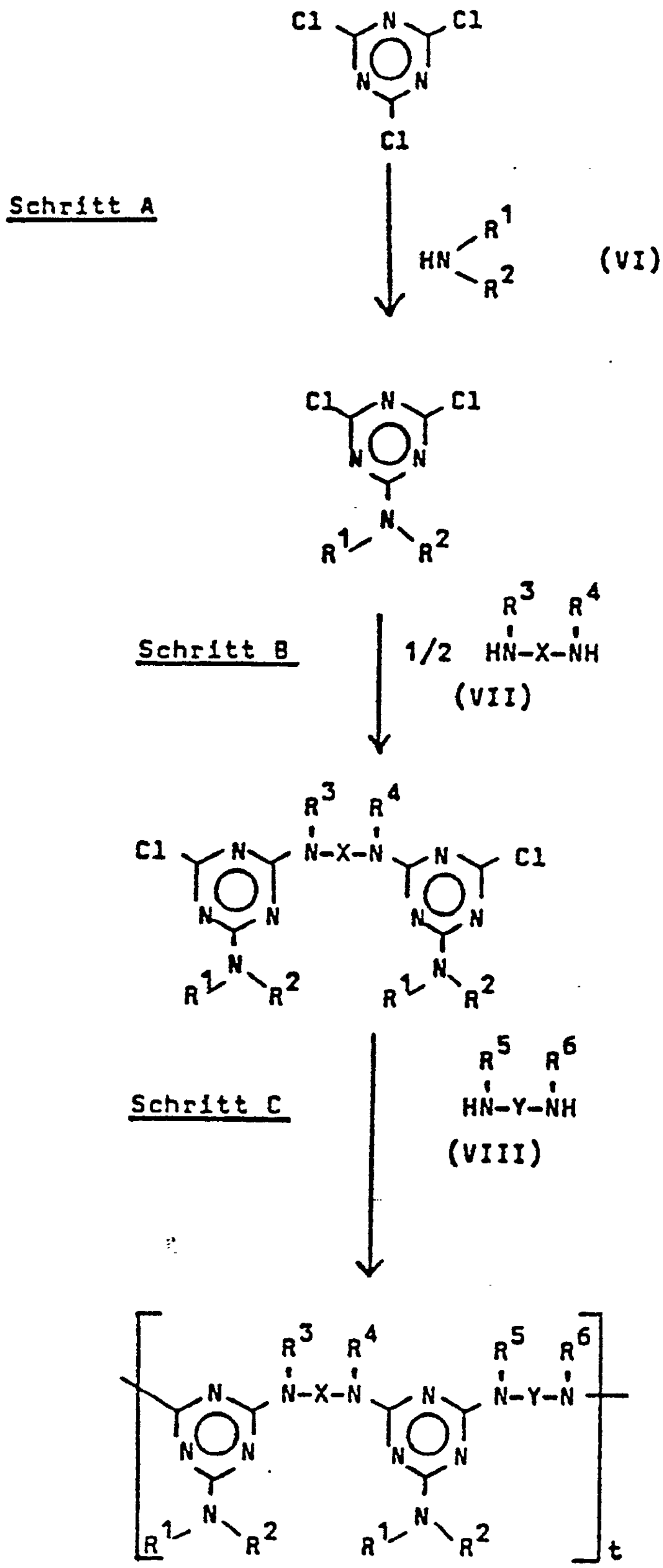


(I)

Im Reaktionsschritt A wird zunächst Cyanurchorid mit der 0,95- bis 1,05 fach-, vorzugsweise der äquimolaren Menge eines Amins der Formel (VI)

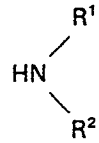

VI

worin $R^1$ und $R^2$ die oben angegebenen Bedeutungen haben, bei 0 bis 40°C umgesetzt.

Im Reakationsschritt B läßt man bei 10 bis 70°C das nach A erhaltene Produkt mit der 0,45- bis 0,55-, vorzugsweise 0,5 fach molaren Menge eines Diamins der Formel (VII)

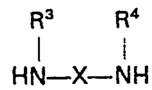

VII

worin die Reste $R^3$, X und $R^4$ die oben angegebenen Bedeutungen haben (Schritt B) reagieren.

Im Rekationsschritt C werden sodann die gemäß B hergestellten Triazine zur Synthese von Verbindungen der Formel (I) mit der 0,95- bis 1,05-, vorzugsweise äquimolaren Menge eines Diamins der Formel (VIII)

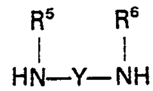

VIII

worin $R^5$, Y und $R^6$ die oben angegebenen Bedeutungen haben (Weg C), bei 70 bis 200°C umgesetzt.

Die Reaktionen werden bei allen Verfahrensstufen in inerten organischen Lösungsmitteln wie z.B. Petrolether, Benzinen, Aceton, Ether, Dioxan, Benzol, Toluol, Xylol, Cumol, Mesitylen oder in Gemischen solcher Lösungsmittel vorgenommen.

Verfahrensschritt A erfordert Rekationstemperaturen von 0 bis 40, vorzugsweise 5 bis 20 und insbesondere 5 bis 10°C. Verfahrensschritt B wird bei 10 bis 70, vorzugsweise 40 bis 70 und insbesondere 50 bis 70°C durchgeführt. Die Polykondensation gemäß Verfahrensschritt C nimmt man bei Reaktionstemperaturen von 70 bis 200, vorzugsweise 100 bis 180 und insbensondere 130 bis 180°C vor.

Bei der Herstellung der neuen Verbindungen gibt man als Halogenwasserstoffakzeptoren anorganische Basen in den, bezogen auf eingesetztes Amin, äquivalenten Mengen zu. Geeignet sind z.B. Natriumhydroxid, Kaliumhydroxide, Natriumcarbonat und Kaliumcarbonat in fester Former oder in wäßriger Lösung.

Beispiele für Ausgangsmaterialien der Formel (VI) sind:

1. 1,9-Bis-[2,4-bis-N-(2,2,6,6-tetramethyl-4-piperidyl)-amino-1,3,5-triazin-6-yl]-1,5,9-triazanonan
2. 1,9-Bis-[2,4-bis-<N-(2,2,6,6-tetramethyl-4-piperidyl)-butylamino>-1,3,5-triazin-6-yl]-1,5,9-triazanonan
3. 1,9-Bis-[2,4-bis-N-(2,2,6,6,-tetramethyl-4-piperidyl)-3-methoxipropylamino>-1,3,5-triazin-6-yl]-1,5,9-triazanonan
4. 1,9-Bis-[2,4-bis-<N-(2,2,6,6-tetramethyl-4-piperidyl)-3-dimethylaminopropylamino>-1,3,5-triazin-6-yl]-1,5,9-triazanonan
5. 1,9-Bis-[2-cyclohexylamino-4-<N-(2,2,6,6-tetramethyl-4-piperidyl)-3-methoxipropylamino>-1,3,5-triazin-6-yl]-1,5,9-triazanonan
6. 1,7-Bis-(2,4-bis-<N-(2,2,6,6,-tetramethyl-4-piperidyl)-3-methoxipropylamino>-1,3,5-triazin-6-yl]-1,4,7-triazaheptan
7. 1,8-Bis-[2,4-bis-<N-(2,2,6,6-tetramethyl-4-piperidyl)-3-dimethylaminopropylamino>-1,3,5-triazin-6-yl]-1,4,8-triazaoctan
8. 1,5,12-Tris-[2,4-bis-<N-(2,2,6,6-tetramethyl-4-piperidyl)-3-methoxipropylamino>-1,3,5-triazin-6-yl]-1,5,8,12-tetraazadodecan
9. 1,7-Bis-[2,4-bis-<N-(2,2,6,6-tetramethyl-4-piperidyl)-octadecylamino>-1,3,5-triazin-6-yl]-1,4,7-triazaheptan
10. 1,9-Bis-[2-dicyclohexylamino-4-<N-(tetramethyl-4-piperidyl)-3-methoxipropylamino>-1,3,5-triazin-6-yl]-1,5,9-triazanonan.

Beispiele für Ausgangsmaterialien der Formeln (VII) und (VIII) sind:

11. 1,2-Diaminoethan
12. 1,6-diaminohexan
13. 4,4'-Diaminodicyclohexylmethan
14. 1,3-Bis-(aminomethyl)-cyclohexan
15. 2(3),5(6)-Bis-(aminomethyl)-norbornan (Isomerengemisch)
16. 3(4),8(9)-Bis-(aminomethyl)-tricyclo-[5,2,1,$0^{2,6}$]-decan (Isomerengemisch)
17. 1-Amino-2-aminomethyl-3,3,5-trimethyl-cyclopentan

18. 1-Amino-3-aza-5,7,7-trimethyl-bicyclo-[3,3,1]-nonan
19. 3-Amino-1-methylaminopropan
20. N,N'-Bis-(2,2,6,6,-tetramethyl-4-piperidyl)-ethylendiamin
21. N-(2,2,6,6-Tetramethyl-4-piperidyl)-1,6-diaminohexan
22. N-(2,2,6,6-Tetramethyl-4-piperidyl)-1,3-bis-(amino-methyl)-cyclohexan
23. N-(2,2,6,6-Tetramethyl-4-piperidyl)-3(4),8(9)-bis-(aminomethyl)-tricyclo-[5,2,1,$0^{2,6}$]-decan (Isomerengemisch)
24. N-(2,2,6,6-Tetramethyl-4-piperidyl)-2(3),5(6)-bis-(aminomethyl)-norbornan (Isomerengemisch)
25. N,N'-Bis-(2,2,6,6-tetramethyl-4-piperidyl)-1,6-diaminohexan
26. N,N'-Bis-(2,2,6,6-tetramethyl-4-piperidyl)-3(4),8(9)-bis-(aminomethyl)-tricyclo-[5,2,1,$0^{2,6}$]-decan (Isomerengemisch)
27. N,N'-Bis-(2,2,6,6-tetramethyl-4-piperidyl)-2(3),5(6)-bis-(aminomethyl)-norbornan (Isomerengemisch)
28. N,N'-Bis-(2,2,6,6-tetramethyl-4-piperidyl)-1,3-bis-(aminomethyl)-cyclohexan
29. N,N'-Bis-(3-aminoproyl)-piperazin
30. Piperazin

Die erfindungsgemäßen Poly-bis-triazinylaminotriazinylamine unterscheiden sich von den als Stand der Technik aus den zitierten DE-Druckschriften bekannten Substanzen in den Resten $R^1$ und $R^2$, indem dort die diesen Resten entsprechenden Reste keine Triazingruppen enthalten, und von den Verbindungen der EP—A—13 665 sowohl durch andersartige Gruppen X und Y als auch dadurch, daß dort nur ein identischer Triazinring in der wiederkehrenden Polymerketteneinheit zur Verknüpfung dient. In letztgenannter EPschrift sind ferner die X und Y entsprechenden Gruppen von den jenigender Stabilisatoren der vorliegenden Erfindung verschieden höchstens einer der Reste X oder Y oder Erfindung ist $C_2$- bis $C_6$-alkylen. Des weiteren handelt es sich bei den Verbindungen der EP—A—13 665 um vernetzte Produkte, wie eindeutig aus dem Herstellverfahren hervorgeht, während, die erfindungsgemäßgen Produkte nicht vernetzt sind.

Überraschend und nicht vorhersehbar war schließlich die überragende Wirksamkeit der neuen Verbindungen im Vergleich zu den den nächsten Stand der Technik darstellenden EP—A—13 665. Selbst gegenüber Verbindungen der nicht vorveröffentlichten DE—A—3045839 zeigen sich überraschende Effekte.

Die neuen Triazinstabilisatoren lassen sich problemlos in die zu stabilisierenden Polymeren einarbeiten und stabilisieren diese hervorragend gegen den lichtinduzierten oxidativen Abbau durch Sauerstoff, Wärme und Licht. Neben der ausgezeichneten Stabilisatorwirksamkeit zeichnen sie sich durch ihre Verträglichkeit mit den zu stabilisierenden Polymeren, ihre Migrations festigkeit gegen das Auswaschen mit wäßrigen Medien, ihre Thermostabilität und ihre geringe Flüchtigkeit aus.

Kunststoffe, die mit den neuen Substanzen stabilisiert werden können, sind z.B:

Polymere, die sich von einfach oder doppelt ungesättigten Kohlenwasserstoffen ableiten, z.B. Polyolefine wie Polyethylen, das gegebenenfalls vernetzt sein kann, Polypropylen, Polybuten-1, Polyisobuten, Polymethylbutene-1, Polymethylpenten-1, Polyisopren, Polybutadien, Polystyrol, Copolymere der den genannten Homopolymeren zugrunde liegenden Monomeren, wie Ethylen-Propylen-Copolymere, Propylen-Buten-1-Copolymere, Propylen-Isobuten-Copolymere, Styrol-Butadien-Copolymere sowie Terpolymere von Ethylen und Propylen mit einem Dien, wie z.B. Hexadien, Dicyclopentadien oder Ethylidennorbornen; Mischungen der obengenannten Homopolymeren, wie beispielsweise Gemische von Polypropylen und Polyethylen, Polypropylen und Polybuten-1, Polypropylen und Polyisobutylen oder von Butadien-Acrylnitril-Copolymerisat mit einem Styrol-Butadien-Copolymerisat.

Halogenhaltige Vinylpolymere, wie Polyvinylchlorid, Polyvinylidenchlorid, Polyvinylfluorid, Polychloropren und Chlorkautschuke sowie Copolymere von Vinylchlorid und Vinylidenchlorid untereinander und mit anderen olefinisch ungesättigten Monomeren.

Polymere, die sich von α,β-ungesättigten Säuren und deren Derivaten ableiten, wie Polyacrylate und Polymethacrylate, Polyacrylamide und Polyacrylnitril sowie deren Copolymere untereinander und mit anderen Vinylverbindungen, wie Acrylnitril-Butadien-Styrol-, Acrylnitril-Styrol- und Acrylnitril-Styrol-Acrylester-Copolymerisate.

Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin und deren Copolymere mit anderen Vinylverbindungen, wie Ethylen-Vinylacetat-Copolymere.

Homo- und Copolymere, die sich von Epoxiden ableiten, wie Polyethylenoxid oder die Polymerisate, die sich von Bisglycidylethern ableiten.

Polyacetale, wie Polyoximethylen und Polyoxiethylen sowie solche Polyoximethylene, die als Comonomeres Ethlenoxid enthalten.

Polyurethane und Polyharnstoffe

Polycarbonate

Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

Polyester, die sich von Dicarbonsäuren und Dialkoholen und/oder von Hydroxicarbonsäuren oder den entsprechenden Lactonen ableiten, wie Polyethylenterephthalat, Polybutylenterephthalat, Poly-1,4-dimethylol-Cyclohexanterephthalat.

Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

Die neuen Verbindungen lassen sich schließlich auch als Stabilisatoren auf dem Harz- und Lacksektor einsetzen. Beispiele sind duroplastische und thermoplastische Acrylharze, welche für Autolackierungen verwendet werden, Acrylharzlacke, das sind die üblichen Einbrennlacke sowie ganz besonders Mischungen auf der Basis von heiß-vernetzbarem Acrylharz und Styrol, sowie Lacke und Beschichtungen auf der Basis von Acryl/Melaminharz und Alkyd/Acryl/Melaminharz. Derartige Lacke können als weitere Zusatzstoffe andere übliche Lichtschutzmittel, phenolische Antioxidantien, Pigmente, Farbstoffe, Metalldesaktivatoren etc. enthalten.

Von besonderer Bedeutung ist die Stabilisierung von Polyolefinen, Styrolpolymerisaten, Polyamiden, Poly-(meth)acrylaten und von Polyurethanen, für die sich die Verbindungen bevorzugt eignen. Beispiele hierfür sind Polyethylen hoher und niedriger Dichte, Polypropylen, Ethylen-Propylen-Copolymerisate, Polystyrol, Styrol-Butadien-Acrylnitril-Terpolymerisate; Mischungen von Polyolefinen oder von Styrolpolymerisaten sowie Polyurethane auf Polyether- oder Polyesterbasis.

Die neuen Stabilisatoren werden nach allgemein üblichen Methoden in die Polymermassen eingearbeitet. Die Einarbeitung kann beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem Verdunstenlassen des Lösungsmittels, erfolgen. Die Mengen liegen bei 0,01 bis 5, vorzugsweise bei 0,05 bis 2,5 und insbesondere bei 0,1 bis 1,0 Gew.-%, bezogen auf das zu stabilisierende Material. Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Kunststoffen zugesetzt werden.

Die durch den Zusatz der erfindungsgemäßen Substanzen stabilisierten Kunststoffe können gegebenenfalls noch andere bekannte und übliche Zusätze, wie beispielsweise Antioxidantien auf Phenol- und Sulfidbasis, Metalldesaktivatoren und Lichtschutzmittel, Phosphitstabilisatoren, Metallverbindungen, Epoxistabilisatoren und mehrwertige Alkohol enthalten.

Beispiele für Antioxidantien sind sterisch gehinderte Phenole wie 2,6-di-tert.-butyl-4-methylphenol, 4,4'-Butyliden-bis-(2,6-di-tert.-butylphenol), 4,4'-Thio-bis-(2-tert.-butyl-5-methylphenol), 2,5-Di-tert.-butyl-4-hydroxianisol, 2,2-Bis-(3,5-di-tert.-butyl-2-hydroxibenzyl)-malonsäuredioctadecylester, 1,3,5-Tris-(3,5-di-tert.-butyl-4-hydroxibenzyl)-2,4,6-trimethylbenzol, 2,4,6-Tri-(3,5-di-tert.-butyl-4-hydroxibenzyl)-phenol, phenolische Triazinverbindungen wie 1,3,5-Tris-(3,5-di-tert.-butyl-4-hydroxibenzyl)-isocyanurat, Ester der β-(3,5-Di-tert.-butyl-4-hydroxiphenyl)-propionsäure mit z.B. Octadecanol, Pentaerythrit und Tris-hydroxiethyl-isocyanurat, Ester der 3,3-Bis-(3-tert.-butyl-4-hydroxiphenyl)-butansäure mit z.B. Ethylenglykol, Thiodipropionsäureestern mit Fettalkoholen, Ca- oder Ni-Salze des 3,5-Di-tert.-butyl-4-hydroxibenzylphosphonsäureethylesters, Dioctadecylsulfid und -disulfid.

Zu den UV-Absorbern und Lichtschutzmitteln gehören 2-(2'-Hydroxiphenyl)-benztriazole wie z.B. das 5-chlor-3',5'-di-tert.-butyl- und 5-chlor-3',5'-di-tert.-amyl-Derivat, 2-Hydroxibenzophenone wie z.B. das 4-Heptoxi- oder 4-Octoxi-Derivat, Salizylate wie Octylphenylsalizylat, Nickelkomplexe wie z.B. der mit 2,2'-Thio-bis-(4-1,1,3,3-tetramethylbutyl)-phenol und Butylamin oder anderen Aminen, Oxalsäurediamide und sterisch gehinderte Amine.

Als Phosphite sind aliphatische, aromatische oder aliphatischaromatische wie z.B. Trisnonylphenylphosphit, Tris-(2,4-di-tert.-butylphenyl)-phosphit, Tris-(2-tert.-butylphenyl)-phosphit oder auch Ester des Pentaerythritphosphite zu nennen.

Unter als Stabilisatoren bekannten Metallverbindungen werden verstanden: Calcium-, Barium-, Strontium-, Zink-, Cadmium-, Magnesium-, Aluminium und Bleiseifen aliphatischer Carbonsäuren oder Oxicarbonsäuren mit etwa 12 bis 32 C-Atomen, Salze der genannten Metalle mit aromatischen Carbonsäuren wie Benzoate oder Salizylate sowie (Alkyl-)Phenolate dieser Metalle, ferner Organozinnverbindungen, wie z.B. Dialkylzinnthioglykolate und -carboxilate.

Bekannte Epoxistabilisatoren sind z.B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentaerythrit, Trimethylolpropan, Sorbit oder Mannit sein, d.h. bevorzugt Alkohole mit 5 oder 6 C-Atomen und 2 bis 6 OH-Gruppen.

Eine wirksame Stabilisatorkombination für Poly-α-Olefine, wie z.B. Hoch-, Mittel- und Niederdruckpolymerisate von $C_2$- bis $C_4$-α-Olefinen, insbesondere Polyethylen und Polypropylen oder von Copolymerisaten derartiger α-Olefine besteht, bezogen auf 100 Gew.-Teile Polymer, beispielsweise aus 0,01 bis 5 Gewichtsteilen einer der erfindungsgemäß zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 3 Gewichtsteilen einer basischen oder neutralen Metallseife, wie z.B. Calciumstearat oder Zinkstearat oder der entsprechenden Oxide sowie

gegebenenfalls 0,01 bis 5 Gewichtsteilen eines bekannten UV-Stabilisators aus der Gruppe der Alkoxihydroxibenzophenone, 4-Hydroxiphenylbenzotriazole, Benzylidenmalonsäuremonomitrilester oder der sog. Quencher, wie z.B. Nickelchelate. Als sonstige übliche Zusätze sind z.B. Weichmacher, Gleitmittel, Emulgatoren, Füllstoffe wie z.B. Kreide, Talkum, Asbest, Pigmente, optische Aufheller, Flammschutzmittel und Antistatika anzusehen.

Die erfindungsgemäß stabilisierten Kunststoffe können in verschiedenster Form angewendet werden, z.B. als Folien, Fasern, Bändchen, Profile oder als Bindemittel für Lacke, Klebemittel oder Kitte.

In den nachstehenden, der weiteren Erläuterung der Erfindung dienenden Beispielen werden die eingesetzten Verbindungen durch Ziffern bezeichnet, welche sich auf die auf den Seiten 8 bis 10 aufgelisteten Substanzen beziehen.

Da die Verfahrensprodukte eine harzartige Struktur besitzen, sind die angegebenen Schmelzpunkte naturgemäß nicht scharf und werden daher mit "ca." angegeben.

Beispiel 1

In einer 250-ml-Rührapparatur werden 150 ml Toluol, 75 ml Aceton und 3,7 g (0,02 Mol) Cyanurchlorid vorgelegt. Dann gibt man 35,4 g (0,02 Mol) der Verbindung 8 portionsweise bei 0 bis 10°C zu und tropft bei 10°C innerhalb von 3 Studen 0,8 g (0,02 Mol) NaOH in 10 ml Wasser gelöst ein und rührt 1 Stunde bei 10°C nach. Nun fügt man 4,7 g (0,01 Mol) der Verbindung 28 hinzu, erhitzt auf 60°C und läßt eine Lösung aus 0,8 g (0,02 Mol) NaOH und 10 ml Wasser innerhalb von 2 Stunden bei 60°C zutropfen. Es wird 1 Stunde nachgerührt, dann die organische Phase abgetrennt und im Vakuum eingeengt.
Ausbeute: 42,0 g = 99,8% d. Th. Fp. ca. 155°C.

Beispiele 2 bis 4

Es wurde wie im vorigen Beispiel unter Einsatz anderer Ausgangstriazinverbindungen und Diamine gearbeitet.

| Bsp. Nr. | Edukt 1<br>= Verb.–Nr. (g=Mol) | Edukt 2<br>= Verb.–Nr. (g=Mol) | Verfahrensprodukt<br>Fp (°C) |
|---|---|---|---|
| 2 | 8 (35,4 = 0,02) | 23 (3,9 = 0,01) | ~ 155 |
| 3 | 9 (18,8 = 0,01) | 14 (1,0 = 0,005) | ~ 100 |
| 4 | 5 (18,7 = 0,02) | 28 (2,0 = 0,01) | ~ 250 |

Beispiel 5

In einer 250-ml-Rührapparatur wird eine Mischung aus 5,8 g (0,005 Mol) N,N'-Bis-[2-Chlor-4-<N-(2,2,6,6-tetramethyl-4-piperidyl)-3-methoxipropylamino>-1,3,5-triazin-6-yl]-N,N'-bis-(aminomethyl)-tricyclo-[5,2,1,$0^{2,6}$]-decan (Isomerengemisch) (Edukt 1), 11,0 g (0,01 Mol) der Verbindung 10 (Edukt 2), 0,4 g (0,01 Mol) NaOH-Pulver und 100 ml Xylol 13 Stunden am Rückfluß gekocht. Es wird heiß filtriet, das Filtrat im Vakuum eingeengt und der Rückstand bei 120°C im Vakuum getrocknet.
15,7 g eines hellen festen Harzes; Fp ~ 120°C.

Beispiele 6 bis 11

Es wurde wie in Beispiel 5 gearbeitet unter Verwendung äquivalenter Menger NaOH.

| Bsp. Nr. | Edukt 1 = Verb. des ... (g = Mol) | Edukt 2 = Verb.–Nr. (g=Mol) | Verfahrensprodukt Fp. (°C) |
|---|---|---|---|
| 6 +) | Beispiels 1 | | |
| | (21,0 ≙ 0,005) | 16 (1,0 = 0,005) | ~165 |
| 7 +) | dto. | 12 (0,6 = 0,005) | ~130 |
| 8 | Beispiels 4 | | |
| | (11,5 ≙ 0,0005) | 25 (2,0 = 0,005) | ~190 |
| 9 | Beispiels 3 | | |
| | (20,9 ≙ 0,005) | 13 (1,1 = 0,005) | ~ 75 |
| 10 +) | Beispiels 2 | | |
| | (20,5 ≙ 0,005) | dto. | ~135 |
| 11 | dto. | 18 (0,9 = 0,005) | ~135 |

+) als Lösungsmittel Mesitylen; 20 Std. Reaktionszeit.

Beispiel 12

In einer 250-ml-Rührapparatur werden 50 ml Mesitylen und 3,7 g (0,02 Mol) Cyanurchlorid vorgelegt. Bei 0 bis 5°C wird hierauf eine Lösung aus 50 ml Mesitylen und 23,3 g (0,02 Mol) der Verbindung 6 (Edukt 1) zugetropft. Nach Zugabe von 1,6 g (0,02 Mol) 50%iger NaOH wird 5 Stunden bei 10°C nachgerührt. Man gibt sodann 9,5 g (0,02 Mol) der Verbindung 26 (Edukt 2) zu, worauf man auf Rückfluß erhitzt, 1,6 g (0,04 Mol) NaOH-Pulver zusetzt und 10 Stunden bei 120 bis 130°C rührt. Es wird heiß filtriert, das Filtrat im Vakuum einrotiert und der Rückstand 4 Stunden bei 120°C im Hochvakuum getrocknet. Erhalten werden 33,5 g eines hellen spröden Harzes (Schmelzbereich ca. 180 bis 220°C).

Beispiele 13 und 14

Man arbeitet wie in Beispiel 12 angegeben.

| Bsp. Nr. | Edukt 1 = Verb.–Nr. (g=Mol) | Edukt 2 = Verb.–Nr.(g=Mol) | Verfahrensprodukt Fp (°C) |
|---|---|---|---|
| 13 | 6 (23,3 = 0,02) | 27 (5,6 = 0,02) | 160–90 |
| 14 +) | 4 (25 = 0,02) | 16 (4,0 = 0,02) | > 250 |

+) Lösungsmittel Xylol.

Beispiel 15

In einer 250-ml-Rührapparatur werden 80 ml Toluol, 40 ml Aceton und 1,8 g (0,01 Mol) Cyanurchlorid vorgelegt. Bei 20°C gibt man 35,4 g (0,02 Mol) der Verbindung 8 zu, erhitzt auf 60°C und tropft innerhalb von 3 Stunden eine Lösung aus 0,8 g (0,02 Mol) NaOH und 10 ml Wasser ein. Die organische Phase wird abgetrennt und im Vakuum zur Trockene eingeengt. Ausbeute 36,3 g vom Fp ~ 150°C.

Beispiel 16

In einer 250-ml-Rührapparatur werden 17,3 g (0,005 Mol) der nach Beispiel 15 erhaltenen Verbindung 0,5 g (0,0025 Mol) der Verbindung 16, 0,2 g (0,005 Mol) NaOH-Pulver und 100 ml Mesitylen 15 Stunden bei 150°C gerührt. Anschließend wird filtriert und das Filtrat im Vakuum eingeengt. Man erhält 16,5 g eines Harzes vom Fp. ~ 170°C.

Beispiel 17

Dieses Beispiel zeigt die Flüchtigkeit der neuen Triazinstabilisatoren im Vergleich zu einem Produkt des nächsten Standes der Technik.

Die Flüchtigkeiten wurden in einer Apparatur zur thermogravimetrischen Analyse bestimmt. Gleiche Menge (500 mg) der erfindungsgemäßen Verbindungen und der Vergleichssubstanz wurden dazu in Stickstoffatmosphäre mit einer Aufheizgeschwindigkeit von 2 K/min bis auf 300°C erhitzt und der Substanzverlust in $mg/cm^2$ Probenoberfläche gemessen. Die Ergebnisse zeigt nachstehende Tabelle.

| Stabilisator gem. Beispiel | Gewichtsverlust in $mg/cm^2$ beim Erreichen von ... °C | | | |
|---|---|---|---|---|
| | 220 | 260 | 300 | 10 min bei 300 °C |
| Vergleich +) | 0,31 | 0,96 | 2,84 | 3,36 |
| 12 | 0 | 0 | 0,95 | 1,90 |
| 10 | 0 | 0,63 | 1,85 | 2,21 |

+) Stabilisator gemäß Bsp. 18 der nicht vorveröffentlichten DE–A–30 45 839 (= EP–A–53 775)

Beispiel 18

In einem Laborschnellmischer wird aus Polypropylenpulver (® Hostalen PPU VP 1770 F der Hoechst AG) von Schmelzindex MFI 190/3 = 1,9 g/10 min s. DIN 53 535 und den unten angegebenen Rezepturbestandteilen eine homogene Mischung hergestellt und in ein Granulat überführt. Das so stabilisierte Material wird sodann in einem Laborextruder unter den üblichen Verarbeitungsbedingungen aufgeschmolzen und über eine Spinnpumpe mit Achtfachspinnkopf zu Monofilamenten versponnen, welche anschließend im Verhältnis 1:3 nachverstreckt, zu Garn von 40 dtex texturiert und zu Prüfgeweben verarbeitet werden. Die als Vergleichsmuster benötigten Prüfgewebe wurden analog, jedoch unter Fortlassen des zu testenden Stabilisators bzw. unter Zusatz der Vergleichsstabilisatoren hergestellt.

100 Gew.-T. Polypropylen,
0,2 Gew.-T. Calciumstearat,
0,1 Gew.-T. 3,3-Bis-(3-tert-buty-4-hydroxiphenyl)butansäureethylenglykolester,
0,1 Gew.-T. Dioctadecyldisulfid,
0,3 Gew.-T. des zu prüfenden Stabilisators.

Die Gewebeproben werden auf einen gelochten Karton so aufgespannt, daß eine freie Öffnung von ca. 15,5 mm Durchmesser bestehen bleibt. Zur Bestimmung der Lichtstabilität wurden die Proben in einer Xenotest-1200-Apparatur der Firma Original Hanau Quarzlampen GmbH der Bestrahlung mit Wechsellicht unterworfen. Die Strahlungsintensität wurde durch UV-Filter (Spezialfilterglas d = 1,7 mm) moduliert. Die Lichtbeständigkeit wurde nach DIN 53 387 (17 min Trockenperiode, 3 min boregnen, Schwarztafeltemperatur 45°C, relative Luftfeuchtigkeit während der Trockenperiode 70 bis 75%) geprüft, indem in bestimmten Zeitabständen die Gewebe zentrisch mit einem Gewicht von 6 mm Durchmesser und einem Druck von 0,1 $N/mm^2$ belastet wurden. Als Versagenstermin gilt das Durchbrechen des Gewichtes.

| Stabilisator nach Beispiel | Belichtungszeit in Stunden |
|---|---|
| Vergleich +) | >3 100 1) |
| Vergleich ++) | ·2 900 |
| Vergleich +++) | 400 |
| Polypropylan | <280 |
| 12 | >3 100 1) |
| 10 | >3 100 1) |

+) Stabilisator gemäß Bsp. 18 der nicht vorveröffentlichten DE–A 30 45 839.

++) Stabilisator gemäß EP–A–13 665.

+++) ohne Stabilisator.

1) Gewicht noch nicht durchgebrochen.

Beispiel 19

Das wie im vorhergehenden Beispiel hergestellte stabilisierte Granulat wird auf einer Labor-Folienblasanlage (Schneckendurchmesser 25 mm, Länge 20 D), Temperaturprogramm 200, 240, 250, 255°C) zu Blasfolien von ca. 70 µm Dichte verarbeitet. Diese Folien werden im Xenotest X 1200 wie in Beispiel 19 beschrieben künstlich bewittert. Also Schädigungsmerkmal wird die Carbonylzahl in Anlehnung an DIN 53 383, Teil 2, gemessen (Diese wird für PP definiert als das Verhältnis der Extinktionen bei 1715 $cm^{-1}$ und 1524 $cm^{-1}$. Bei einer Co-Zahl >2 beginnt der Zerfall der Prüfkörper zu Pulver).

| Stabilisator nach Beispiel | C = O – Zahl nach . . . Stunden | | | |
|---|---|---|---|---|
| | 500 | 1000 | 2000 | 2500 |
| Polypropylen | >2 | – | – | – |
| Vergleich +) | <0,1 | <0,1 | 0,3 | 0,5 |
| Vergleich ++) | <0,1 | 0,1 | 0,4 | 0,7 |
| Vergleich +++) | >2 | – | – | – |
| 12 | <0,1 | <0,1 | 0,2 | 0,4 |
| 10 | <0,1 | <0,1 | 0,3 | 0,4 |

+) Stabilisator gemäß Bsp. 18 der nicht vorveröffentlichten DE–A–30 45 839.

++) Stabilisator gemäß EP–A–13 665.

+++) ohne Stabilisator.

**Patentansprüche für die Vertragsstaaten: BE CH DE FR GB IT LI NL SE**

1. Poly-bis-triazinylaminotriazinylamine der Formel (I)

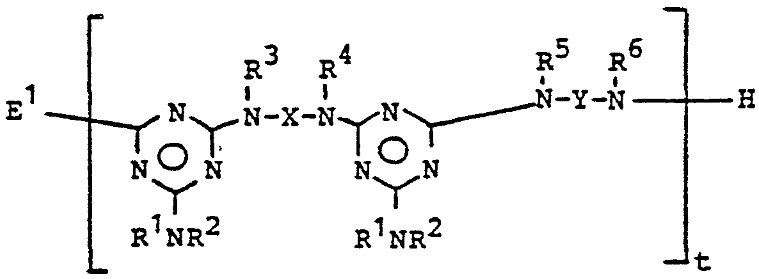

I

in welcher

t eine ganze Zahl von >1 bis 20 und bedeutet und

$R^1$ und $R^2$ gleich oder verschieden sind und für eine Gruppe der Formel (II) stehen

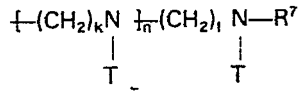

II

wobei in dieser Formel

k und l gleiche oder unterschiedliche ganze Zahlen von 2 bis 6 und

n von 2 oder 3 bedeuten,

$R^7$ stoff, $C_1$- bis $C_{18}$-Alkyl, $C_5$- bis $C_{12}$-Cycloalkyl, $C_7$- bis $C_9$-Phenylalkyl oder eine Gruppe der Formel (IV),

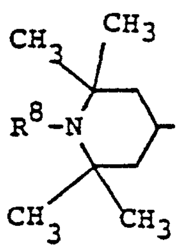

IV

mit

$R^8$ = Wasserstoff, $C_1$- bis $C_{12}$-Alkyl oder Benzyl, steht und

T die Bedeutung eines Restes der Formel (V)

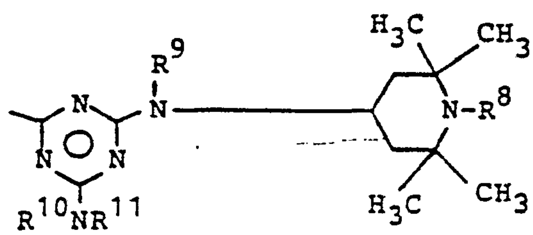

V

hat, in welcher

$R^8$ die vorstehend angegebene Bedeutung hat,

$R^9$ und $R^{10}$ gleiche oder verschiedene Reste sind, die Wasserstoff, Alkyl mit bis zu 18 C-Atomen das durch $C_1$- bis $C_{18}$-Alkoxi substituiert sein kann, $C_5$- bis $C_{12}$-Cycloalkyl, das durch 1 bis 4 $C_1$- bis $C_4$-Alkylgruppen substituiert sein kann, Allyl, Phenyl, das durch bis zu zwei $C_1$- bis $C_8$-Alkylgruppen und/oder durch eine OH-Gruppe substituiert sein kann, $C_7$- bis $C_{14}$-Aralkyl, oder einer Gruppe der Formel (IV) bedeuten, und

$R^{11}$ die Bedeutung von Wasserstoff, von $C_1$- bis $C_{18}$-Alkyl, von $C_5$- bis $C_{12}$-Cycloalkyl, von $C_7$- bis $C_{14}$-Aralkyl, oder von einer Gruppe der Formel (IV) hat,

$R^3$, $R^4$, $R^5$, $R^6$ gleiche oder verschiedene Reste $R^{11}$, darstellen,

X und Y gleich oder verschieden sind und die Bedeutung haben von $C_2$- bis $C_6$-Alkylen, von 1,3-Bis-(methylen)-cyclohexan, 2(3),5(6)-Bis-(methylen)-norbornan, 3(4),8(9)-Bis-(methylen)-tricyclo-[5,2,1,$0^{2,6}$]-decan, 2-Methylen-3,3,5-trimethyl-cyclopentyl oder 4,4'-Dicyclohexylmethan oder auch an Stelle der Gruppierungen

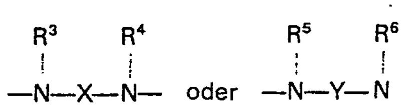

Piperazinylenreste, oder an Stelle der Gruppierungen

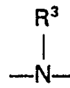, 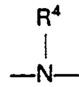, 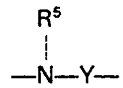 oder 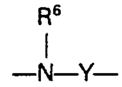

durch bis zu vier Methylgruppen substituierte $C_5$- bis $C_9$-Azamono- oder -Bicycloalkylenreste treten, können, mit der Einschränkung, daß entweder nur X oder nur Y $C_2$- bis $C_6$-Alkylen sein darf,

$E^1$ für Cl oder eine Gruppe der Formel

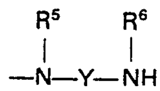 oder 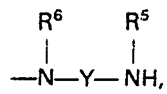,

steht, und in Formel (I) mindestens einer der Reste $R^1$, $R^2$, $R^3$, $R^4$, $R^5$ und $R^6$ eine Gruppe der Formel (IV) bedeutet, oder diese Gruppe enthalten.

2. Verfahren zur Herstellung der Verbindungen nach Anspruch 1, dadurch gekennzeichnet, daß man zunächst Cyanurchorid mit der 0,95- bis 1,05 fach molaren Menge eines Amins der Formel (VI)

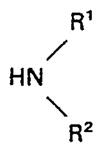
VI

in der $R^1$ und $R^2$ die in Anspruch 1 angegebene Bedeutung haben, bei 0 bis 40°C umgesetzt, die derart erhaltenen Produkte sodann mit der 0,45- bis 0,55 fach molaren Menge eines Diamins der Formel (VII)

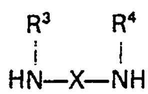
VII

in der $R^3$, X und $R^4$ die in Anspruch 1 angegebene Bedeutung haben, und hierauf die erhaltenen Triazine mit der 0,95- bis 1,05 fach molaren Menge eines Diamins der Formel (VIII)

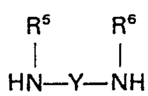
VIII

in der $R^5$, Y und $R^6$ die in Anspruch 1 angegebene Bedeutung haben, bei 70 bis 200°C umsetzt, wobei man bei allen Verfahrensstufen in inerten organischen Lösungsmitteln und bei Anwesenheit einer äquivalenten Menge einer anorganischen Base bezogen auf eingesetztes Amin arbeitet und die einzelnen Reaktionsschritte auch ohne Isolierung der Zwischenprodukte durchführen kann.

3. Verwendung der Poly-bis-triazinylaminotriazinylamine nach Anspruch 1 zum Stabilisieren von synthetischen Polymeren.

4. Verwendung nach Anspruch 3, dadurch gekennzeichnet, daß die Polymeren Polyolefine sind.

5. Verwendung nach Anspruch 3, dadurch gekennzeichnet, daß die Polymeren Polyacrylate, Polymethacrylate oder Homo- oder Copolymerisate des Styrols sind.

6. Verfahren zum Stabilisieren von synthetischen Polymeren gegen den schädigenden Einfluß von Licht, dadurch gekennzeichnet, daß man den Polymeren, gegebenenfalls, neben bekannten, stabilisierend wirkenden Stoffen, 0,01 bis 5 Gewichtsteile, bezogen auf Polymeres, einer Verbindung nach Anspruch 1 zusetzt.

7. Gegen UV-Zersetzung stabilisierte, synthetische Polymere, in denen 0,01 bis 5 Gewichtsteile, bezogen auf Polymeres, einer Verbindung nach Anspruch 1 enthalten sind.

**Patentansprüche für den Vertragsstaat: AT**

1. Verfahren zur Herstellung von Poly-bis-triazinylaminotriazinylaminen der Formel (I)

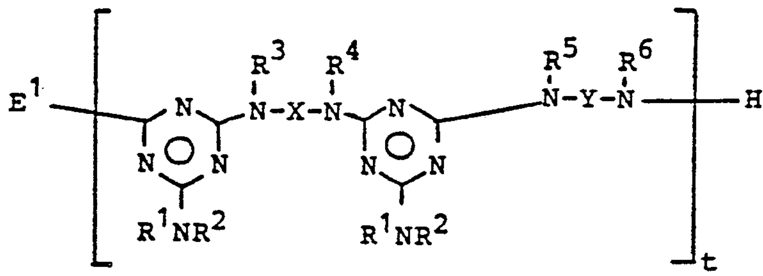

I

in welcher

t eine ganze Zahl von >1 bis 20 und bedeutet und

$R^1$ und $R^2$ gleich oder verschieden sind und für eine Gruppe der Formel (II) stehen

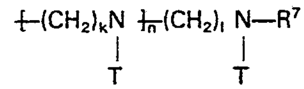

II

wobei in dieser Formel

k und l gleiche oder unterschiedliche ganze Zahlen von 2 bis 6 und

n von 0 bis 3 bedeuten,

$R^7$ stoff, $C_1$- bis $C_{18}$-Alkyl, $C_5$- bis $C_{12}$-Cycloalkyl, $C_7$- bis $C_9$-Phenylalkyl oder eine Gruppe der Formel (IV),

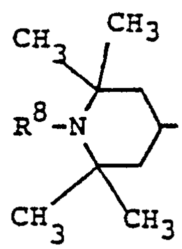

IV

mit

$R^8$ = Wasserstoff, $C_1$- bis $C_{12}$-Alkyl oder Benzyl, steht und

T die Bedeutung eines Restes der Formel (V)

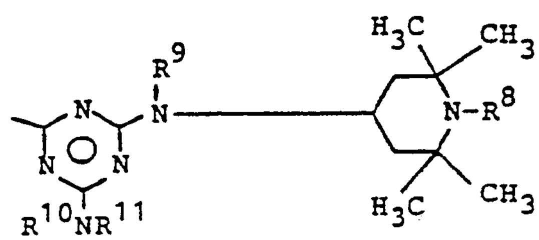

V

hat, in welcher

$R^8$ die vorstehend angegebene Bedeutung hat,

$R^9$ und $R^{10}$ gleiche oder verschiedene Reste sind, die Wasserstoff, Alkyl mit bis zu 18 C-Atomen das durch $C_1$- bis $C_{18}$-Alkoxi substituiert sein kann, $C_5$- bis $C_{12}$-Cycloalkyl, das durch 1 bis 4 $C_1$- bis $C_4$-Alkylgruppen substituiert sein kann, Allyl, Phenyl, das durch bis zu zwei $C_1$- bis $C_8$-Alkylgruppen und/oder durch eine OH-Gruppe substituiert sein kann, $C_7$- bis $C_{14}$-Aralkyl, oder eine Gruppe der Formel (IV) bedeuten, und

$R^{11}$ die Bedeutung von Wasserstoff, von $C_1$- bis $C_{18}$-Alkyl, von $C_5$- bis $C_{12}$-Cycloalkyl, von $C_7$- bis $C_{14}$-Aralkyl, oder von einer Gruppe der Formel (IV) hat,

$R^3$, $R^4$, $R^5$, $R^6$ gleiche oder verschiedene Reste $R^{11}$, darstellen,

X und Y gleich oder verschieden sind und die Bedeutung haben von $C_2$- bis $C_6$-Alkylen, von 1,3-Bis-(methylen)-cyclohexan, 2(3),5(6)-Bis-(methylen)-norbornan, 3(4),8(9)-Bis-(methylen)-tricyclo-[5,2,1,$0^{2,6}$]-decan, 2-Methylen-3,3,5-trimethyl-cyclopentyl oder 4,4'-Dicyclohexylmethan oder auch an Stelle der Gruppierungen

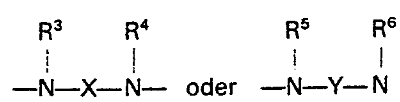

Piperazinylenreste, oder an Stelle der Gruppierungen

$$-\overset{R^3}{\overset{|}{N}}-X-,\quad -\overset{R^4}{\overset{|}{N}}-X-,\quad -\overset{R^5}{\overset{|}{N}}-Y-\quad \text{oder}\quad -\overset{R^6}{\overset{|}{N}}-Y-$$

durch bis zu vier Methylgruppen substituierte $C_5$- bis $C_9$-Azamono- oder -Bicycloalkylenreste treten, können, mit der Einschränkung, daß entweder nur X oder nur Y $C_2$- bis $C_6$-Alkylen sein darf,

$E^1$ für Cl oder sine Gruppe der Formel

$$-\overset{R^5}{\overset{|}{N}}-Y-\overset{R^6}{\overset{|}{N}}H\quad \text{oder}\quad -\overset{R^6}{\overset{|}{N}}-Y-\overset{R^5}{\overset{|}{N}}H,$$

steht, und in Formel (I) mindestens einer der Reste $R^1$, $R^2$, $R^3$, $R^4$, $R^5$ und $R^6$ eine Gruppe der Formel (IV) bedeutet, oder diese Gruppe enthalt, dadurch gekennzeichnet, daß man zunächst Cyanurchlorid mit 0,95- bis 1,05 fach molaren Menge eines Amine der Formel (VI)

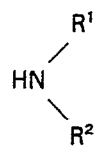

VI

in der $R^1$ und $R^2$ die oben angegebene Bedeutung haben, bei 0 bis 40°C umsetzt, die derart erhaltenen Produkte sodann mit der 0,45- bis 0,55 fach molaren Menge eines Diamins der Formel (VII)

$$H\overset{R^3}{\overset{|}{N}}-X-\overset{R^4}{\overset{|}{N}}H \qquad \text{VII}$$

in der $R^3$, X und $R^4$ die oben angegebene Bedeutung haben, und hierauf die erhaltenen Triazine mit der 0,45- bis 0,55 fach molaren Menge eines Diamins der Formel (VIII)

$$H\overset{R^5}{\overset{|}{N}}-Y-\overset{R^6}{\overset{|}{N}}H \qquad \text{VIII}$$

in der $R^5$, Y und $R^6$ die oben angegebene Bedeutung haben, bei 70 bis 200°C polykondensiert, wobei man bei allen Verfahrensstufen in inerten organischen Lösungsmitteln und bei Anwesenheit einer äquivalenten Menge einer anorganischen Base benzogen auf eingesetztes Amin arbeitet und die einzelnen Reaktionsschritte auch ohne Isolierung der Zwischenprodukte durchführen kann.

2. Verwendung der nach Anspruch 1 erhaltenen Verbindungen zum Stabilisieren von synthetischen Polymeren.

3. Verwendung nach Anspruch 2, dadurch gekennzeichnet, daß die Polymeren Polyolefine sind.

4. Verwendung nach Anspruch 2, dadurch gekennzeichnet, daß die Polymeren Polyacrylate, Polymethacrylate oder Homo- oder Copolymerisate des Styrols sind.

5. Verfahren zum Stabilisieren von synthetischen Polymeren gegen den schädigenden Einfluß von Licht, dadurch gekennzeichnet, daß man den Polymeren, gegebenenfalls, neben bekannten, stabilisierend wirkenden Stoffen, 0,01 bis 5 Gewichtsteile, bezogen auf Polymeres, einer Verbindung nach Anspruch 1 zusetzt.

6. Gegen UV-Zersetzung stabilisierte, synthetische Polymere, in denen 0,01 bis 5 Gewichtsteile, bezogen auf Polymeres, einer Verbindung nach Anspruch 1 enthalten sind.

**Claims for the Contracting States: BE CH DE FR GB IT LI NL SE**

1. A poly-bis-triazinylaminotriazinylamine of the formula (I)

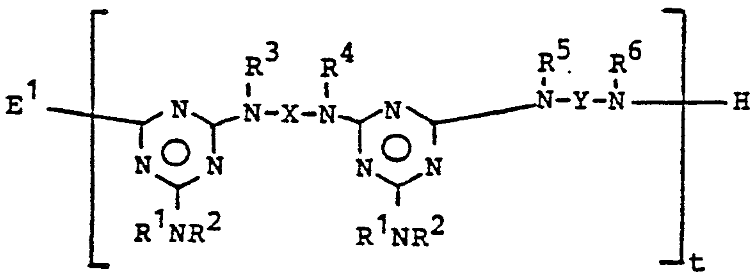

I

in which t denotes an integer from >1 to 100 and $R^1$ and $R^2$ are identical or different and represent a group of the formula II

$$-[(CH_2)_k\underset{T}{N}]_n-(CH_2)_l\ \underset{T}{N}-R^7 \qquad II$$

in which formulae k and l denote identical or different integers from 2 to 6 and n denotes an integer from 0 to 3, $R^7$ represents hydrogen, $C_1$—$C_{18}$ alkyl, $C_5$—$C_{12}$- cycloalkyl, $C_7$—$C_9$ phenylalkyl or a group of the formula (IV)

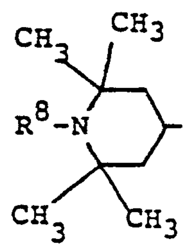

IV

in which $R^8$ is hydrogen, $C_1$—$C_{12}$ alkyl or benzyl, and T denotes a radical of the formula V

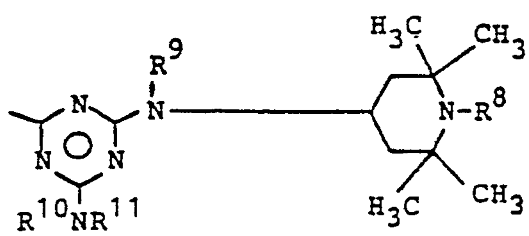

V

in which $R^8$ has the meanings indicated above, $R^9$ and $R^{10}$ are identical or different radicals which denote hydrogen, alkyl with up to 18 C-atoms which can be substituted by $C_1$—$C_{18}$ alkoxy, or denote $C_5$—$C_{12}$ cycloalkyl which can be substituted by 1 to 4 $C_1$—$C_4$ alkyl groups, or denote allyl, phenyl which can be substituted by up to two $C_1$—$C_8$ alkyl groups and/or by an OH group, $C_7$—$C_{14}$ aralkyl or a group of the formula IV, and $R^{11}$ denotes hydrogen, $C_1$—$C_{18}$, $C_5$—$C_{12}$ cycloalkyl, $C_7$—$C_{14}$ aralkyl or a group of the formula IV, $R^3$, $R^4$, $R^5$ and $R^6$ represent identical or different radicals $R^{11}$, X and Y are identical or different and denote $C_2$—$C_6$ alkylene, 1,3-bis-(methylene)-cyclohexane, 2(3),5(6)-bis-(methylene)-norbornane, 3(4),8(9)-bis-(methylene)-tricyclo-[5,2,1,$0^{2,6}$]-decane, 2-methylene-3,3,5-trimethyl-cyclopentyl or 4,4'-dicyclohexyl-methane, or the groupings

$$-\overset{R^3}{N}-X-\overset{R^4}{N}- \quad \text{or} \quad -\overset{R^5}{N}-Y-\overset{R^6}{N}-$$

can be replaced by piperazinylene radicals, or the groupings

$$-\overset{R^3}{N}-X-, \quad -\overset{R^4}{N}-X- \quad -\overset{R^5}{N}-Y- \quad \text{or} \quad -\overset{R^6}{N}-Y-$$

can be replaced by $C_5$—$C_9$ azamonocycloalkylene or azabicycloalkylene radicals which are substituted by up to four methyl groups, with the limitation that, either X alone or Y alone may be $C_2$—$C_6$ alkylene, $E^1$ represents Cl or a group of the formula

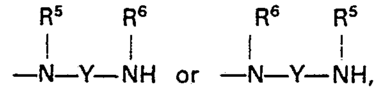

and, in formula I, at least one of the radicals $R^1$, $R^2$, $R^3$, $R^4$, $R^5$ and $R^6$ denotes a group of the formula IV or contains this group.

2. A process for the preparation of the compounds as claimed in claim 1, which comprises, firstly, reacting cyanuric chloride at 0 to 40°C with a 0.95-molar to 1.05-molar quantity of an amine of the formula VI

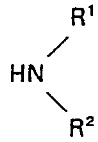

VI

in which $R^1$ and $R^2$ have the meaning indicated in claim 1, then reacting the products thus obtained with a 0.45-molar to 0.55-molar quantity of a diamine of the formula VII

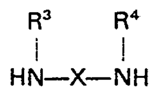

VII

in which $R^3$, X and $R^4$ have the meaning indicated in claim 1 and then, at 70 to 200°C, the triazines obtained with a 0.95-molar to 1.05-molar quantity of a diamine of the formula VIII

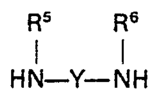

VIII

in which $R^5$, Y and $R^6$ have the meaning indicated in claim 1, the reactions being carried out, in all variants or process stages, in inert organic solvents and in the presence of an equivalent quantity, relative to the amine employed, of an inorganic base, it being also possible to carry out the individual reaction stages without isolating the intermediate products.

3. The use of the poly-bis-triazinylaminotriazinylamine as claimed in claim 1 for stabilizing synthetic polymers.

4. Use as claimed in claim 3, wherein the polymers are polyolefins.

5. Use as claimed in claim 3, wherein the polymers are polyacrylates, polymethacrylates or homopolymers or copolymers of styrene.

6. A process for stabilizing synthetic polymers against the harmful effects of light, which comprises adding 0.01 to 5 parts by weight, relative to the polymer, of a compound as claimed in claim 1 to the polymers, if appropriate together with known substances which have a stabilizing action.

7. Synthetic polymers which have been stabilized against decomposition by UV and which contain 0.01 to 5 parts by weight, relative to the polymer, of a compound as claimed in claim 1.

**Claims for Contracting State: AT**

1. A process for the manufacture of poly-bis-triazinylaminotriazinylamine of the formula (I)

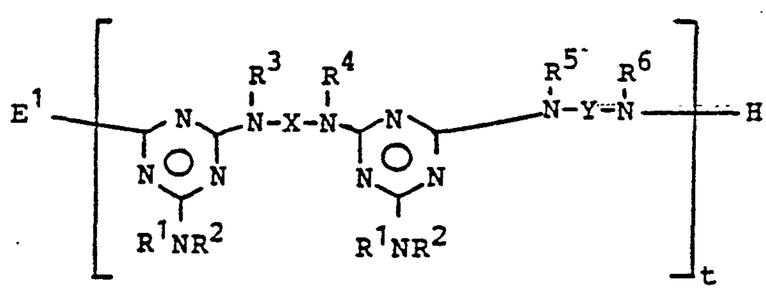

I

in which t denotes an integer from >1 to 100 and $R^1$ and $R^2$ are identical or different and represent a group of the formula II

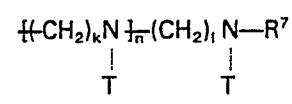

II

in which formulae k and l denote identical or different integers from 2 to 6 and n denotes and integer from 0

to 3, $R^7$ represents hydrogen, $C_1$—$C_{18}$ alkyl, $C_5$—$C_{12}$— cycloalkyl, $C_7$—$C_9$ phenylalkyl or a group of the formula (IV)

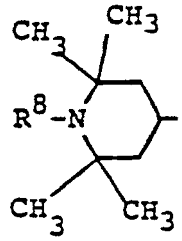

IV

in which $R^8$ is hydrogen, $C_1$—$C_{12}$ alkyl or benzyl, and T denotes a radical of the formula V

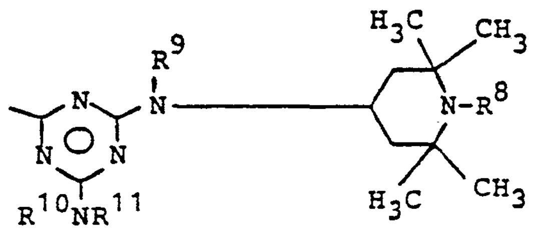

V

in which $R^8$ has the meanings indicated above, $R^9$ and $R^{10}$ are identical or different radicals which denote hydrogen, alkyl with up to 18 C-atoms which can be substituted by $C_1$—$C_{18}$ alkoxy, or denote $C_5$—$C_{12}$ cycloalkyl which can be substituted by 1 to 4 $C_1$—$C_4$ alkyl groups, or denote allyl, phenyl which can be substituted by up to two $C_1$—$C_8$ alkyl groups and/or by an OH group, $C_7$—$C_{14}$ aralkyl or a group of the formula IV, and $R^{11}$ denotes hydrogen, $C_1$—$C_{18}$, $C_5$—$C_{12}$ cycloalkyl, $C_7$—$C_{14}$ aralkyl or a group of the formula IV, $R^3$, $R^4$, $R^5$ and $R^6$ represent identical or different radicals $R^{11}$, X and Y are identical or different and denote $C_2$—$C_6$ alkylene, 1,3-bis-(methylene)-cyclohexane, 2(3),5(6)-bis-(methylene)-norbornane, 3(4),8(9)-bis-(methylene)-tricyclo-[5,2,1,$0^{2,6}$)-decane, 2-methylene-3,3,5-trimethyl-cyclopentyl or 4,4'-dicyclohexyl-methane, or the groupings

$$-\overset{R^3}{\underset{|}{N}}-X-\overset{R^4}{\underset{|}{N}}- \quad \text{or} \quad -\overset{R^5}{\underset{|}{N}}-Y-\overset{R^6}{\underset{|}{N}}-$$

can be replaced by piperazinylene radicals, or the groupings

$$-\overset{R^3}{N}-X-, \quad -\overset{R^4}{N}-X- \quad -\overset{R^5}{N}-Y- \quad \text{or} \quad -\overset{R^6}{N}-Y-$$

can be replaced by $C_5$—$C_9$ azamonocycloalkylene or azabicycloalkylene radicals which are substituted by up to four methyl groups, with the limitation that, either X alone or Y alone may be $C_2$—$C_6$ alkylene, $E^1$ represents Cl or a group of the formula

$$-\overset{R^5}{N}-Y-\overset{R^6}{N}H \quad \text{or} \quad -\overset{R^6}{N}-Y-\overset{R^5}{N}H,$$

and, in formula I, at least one of the radicals $R^1$, $R^2$, $R^3$, $R^4$, $R^5$ and $R^6$ denotes a group of the formula IV or contains this group, which comprises, firstly, reacting cyanuric chloride at 0 to 40°C with a 0.95-molar to 1.05-molar quantity of an amine of the formula VI

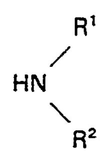

VI

in which $R^1$ and $R^2$ have the meaning indicated above, then reacting the products thus obtained with a 0.45-molar to 0.55-molar quantity of a diamine of the formula VII

$$H\overset{R^3}{N}-X-\overset{R^4}{N}H \qquad \text{VII}$$

in which $R^3$, X and $R^4$ have the meaning indicated above and then, at 70 to 200°C, the triazines obtained with a 0.95-molar to 1.05-molar quantity of a diamine of the formula VIII

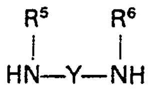

VIII

in which $R^5$, Y and $R^6$ have the meaning indicated above, the reactions being carried out, in all variants or process stages, in inert organic solvents and in the presence of an equivalent quantity, relative to the amine employed, of an inorganic base, it being also possible to carry out the individual reaction stages without isolating the intermediate products.

2. The use of the poly-bis-triazinylaminotriazinylamines as obtained according to claim 1 for stabilizing synthetic polymers.

3. Use as claimed in claim 2, wherein the polymers are polyolefins.

4. Use as claimed in claim 2, wherein the polymers are polyacrylates, polymethacrylates or homopolymers or copolymers of styrene.

5. A process for stabilizing synthetic polymers against the harmful effects of light, which comprises adding 0.01 to 5 parts by weight, relative to the polymer, of a compound as claimed in claim 1 to the polymers, if appropriate together with known substances which have a stabilizing action.

6. Synthetic polymers which have been stabilized against decomposition by UV and which contain 0.01 to 5 parts by weight, relative to the polymer, of a compound as claimed in claim 1.

**Revendications pour les Etats contracteurs: BE CH DE FR GB IT LI NL SE**

1. Poly-bis-triazinylamino-triazinylamines répondant à la formule I:

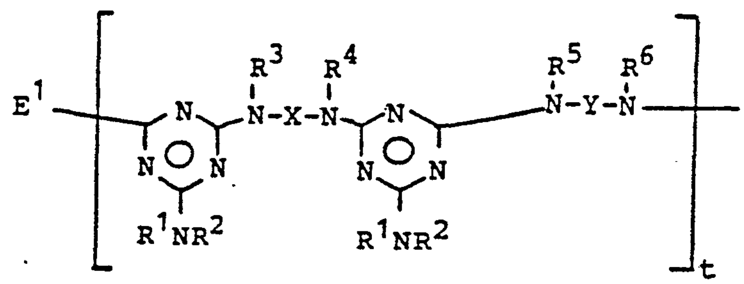

I

dans laquelle

t représente un nombre de >1 à 20,

$R^1$ et $R^2$ sont indentiques ou différents et représentent chacun un radical répondant à la formule II

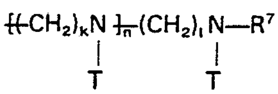

II

dans laquelle

k et l représentent des nombres entiers, identiques ou différents, de 2 à 6,

n représente un nombre de 0 à 3,

$R^7$ représente l'hydrogène, un alkyle en $C_1$—$C_{18}$, un cycloalkyle en $C_5$—$C_{12}$, un phénylalkyle en $C_7$—$C_9$ ou un radical répondans à la formule IV

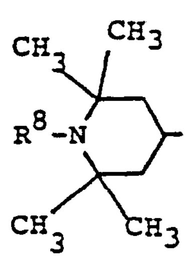

IV

dans laquelle

$R^8$ représente l'hydrogène, un alkyle en $C_1$—$C_{12}$ ou un benzyle,

T représente un radical répondant à la formule V

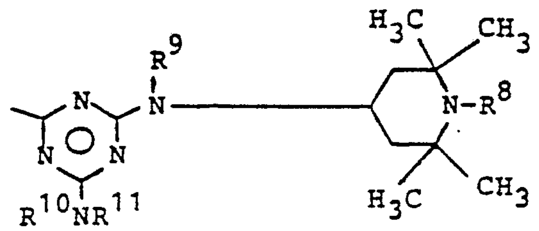

V

dans laquelle

$R^8$ a la signification précédemment donnée,

$R^9$ et $R^{10}$ son indentiques ou différents et représentent chacun l'hydrogène, un alkyle à au plus 18 atomes de carbone, éventuellement porteur d'un alcoxy en $C_1$—$C_{18}$, un cycloalkyle en $C_5$—$C_{12}$, éventuellement porteur d'un à quatre radicaux alkyles en $C_1$—$C_4$, une allyle, un phényle éventuellement porteur d'au plus deux radicaux alkyles en $C_1$—$C_8$ et/ou d'un radical —OH, un aralkyle en $C_7$—$C_{14}$ ou un radical de formule IV, et

$R^{11}$ représente l'hydrogène, un alkyle en $C_1$—$C_{18}$, un cycloalkyle en $C_5$—$C_{12}$, un aralkyle en $C_7$—$C_{14}$ ou un radical de formule IV,

$R^3$, $R^4$, $R^5$ et $R^6$ représentent des radicaux $R^{11}$ identiques ou différents,

X et Y sont indentiques ou différents et représentent chacun un radical alkylène en $C_2$—$C_6$, un radical cyclohexane-bis-méthylène-1,3, un radical norbornane-bis-méthylène-2(3),5(6), un radical tricyclo-[5,2,1,$0^{2,6}$]décane-bis-méthylène-3(4),8(9), un radical méthylène-2 triméthyl-3,3,5 cyclopentyle ou un radical 4,4'-dicyclohexylméthane, ou encore un des groupements

$R^3$ $R^4$ — $R^5$ $R^6$

—N—X—N— et —N—Y—N—

ou les deux pouvant être remplacés par un radical pipérazinylène, ou un ou plusieurs des groupements

$R^3$ — $R^4$ — $R^5$ — $R^6$

—N—X—, —N—X— —N—Y— et —N—Y—

pouvant être remplacés par des radicaux aza-monocyclo- ou -bicyclo-alklènes en $C_5$—$C_9$ qui portent au plus quatre radicaux méthyles, avec la restriction qu'au plus un des symboles X et Y puisse représenter un alklène en $C_2$—$C_6$,

$E^1$ représente un atome de chlore ou un radical

$R^5$ $R^6$ — $R^6$ $R^5$

—N—Y—NH ou —N—Y—NH,

au moins l'un des symboles $R^1$, $R^2$, $R^3$, $R^4$, $R^5$ et $R^6$ présents dans la formule I devant représenter ou contenir un radical de formule IV

2. Procédé de préparation des composés selon la revendication 1, procédé caractérisé en ce que:

on fait d'abord réagir le chlorure de cyanuryle avec de 0,95 à 1,05 fois la quantité molaire d'une amine répondant à la formule VI

HN(—$R^1$)(—$R^2$) VI

dans laquelle $R^1$ et $R^2$ ont les significations données à la revendication 1, à une température de 0 à 40°C,

puis on fait réagir les produits ainsi obtenus avec de 0,45 à 0,55 frois la quantité molaire d'une diamine répondant à la formule VII

$R^3$ $R^4$

HN—X—NH VII

dans laquelle $R^3$, X et $R^4$ ont les significations données à la revendication 1,

et ensuite on fait réagir les triazines obtenues avec de 0,95 à 1,5 fois la quantité molaire d'une diamine répondant à la formule VIII

$R^5$ $R^6$
| |
HN—Y—NH VIII

dans laquelle $R^5$, Y et $R^6$ on les significations qui ont été données à la revendication 1, à une température de 70 à 200°C,

tous les stades du procédé étant exécutés dans des solvants organiques inertes et en présence d'une base minérale utilisée en une quantité équivalente par rapport à l'amine mise en jeu, et les diverses étapes réactionnelles pouvant également être exécutées sans isolement des corps intermédiaires.

3. Application des poly-bis-triazinylamino-triazinylamines selon la revendication 1 pour la stabilisation de polyméres synthétiques.

4. Application selon la revendication 3 caractérisée en ce que les polyèmeres sont des polyoléfines.

5. Application selon la revendication 3 caractérisée en ce que les polymères sont des polyacrylates, des polyméthacrylates ou des homo- ou copolymères du styrène.

6. Procédé pour stabiliser des polymères synthétiques contre les effets destructeurs de la luminère, procédé caractérisé en ce qu'on ajoute aux polymères, éventuellement en plus de composés connus à action stabilisante, de 0,01 à 5% en poids, par rapport aux polymères, d'un composé selon la revendication 1.

7. Polymères synthétiques stabilisés contre les effets destructeurs des rayons ultraviolets, polymères qui contiennent de 0,01 à 5% en poids, par rapport aux polymères, d'un composé selon la revendication 1.

**Revendications pour l'Etat contractant: AT**

1. Procédé pour préparer des poly-bis-triazinylamino-triazinylamines répondant à la formule I:

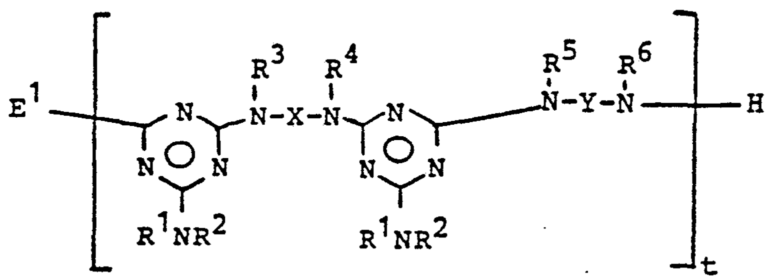

I

dans laquelle

t représente un nombre entier de >1 à 20,

$R^1$ et $R^2$ sont indentiques ou différents et représentent chacun un radical répondant à la formule II

$$-[(CH_2)_k\underset{T}{N}]_n-(CH_2)_l\underset{T}{N}—R^7 \qquad II$$

dans laquelle

k et l représentent des nombres entiers, identiques ou différents, de 2 à 6,

n représente un nombre de 0 à 3,

$R^7$ représente l'hydrogène, un alkyle en $C_1—C_{18}$, un cycloalkyle en $C_5—C_{12}$, un phénylalkyle en $C_7—C_9$ ou un radical répondans à la formule IV

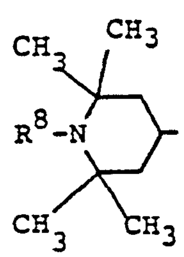

IV

dans laquelle

$R^8$ représente l'hydrogène, un alkyle en $C_1—C_{12}$ ou un benzyle,

T représente un radical répondant à la formule V

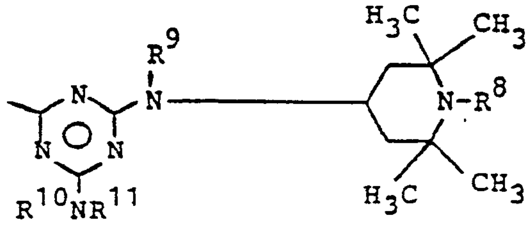

V

dans laquelle

$R^8$ a la signification précédemment donnée,

$R^9$ et $R^{10}$ son indentiques ou différents et représentent chacun l'hydrogène, un alkyle à au plus 18 atomes de carbone, éventuellement porteur d'un alcoxy en $C_1$—$C_{18}$, un cycloalkyle en $C_5$—$C_{12}$, éventuellement porteur d'un à quatre radicaux alkyles en $C_1$—$C_4$, une allyle, un phényle éventuellement porteur d'au plus deux radicaux alkyles en $C_1$—$C_8$ et/ou d'un radical —OH, un aralkyle en $C_7$—$C_{14}$ ou un radical de formule IV, et

$R^{11}$ représente l'hydrogène, un alkyle en $C_1$—$C_{18}$ , un cycloalkyle en $C_5$—$C_{12}$, un aralkyle en $C_7$—$C_{14}$ ou un radical de formule IV,

$R^3$, $R^4$, $R^5$ et $R^6$ représentent des radicaux $R^{11}$ identiques ou différentes,

X et Y sont indentiques ou différents et représentent chacun un radical alkylène en $C_2$—$C_6$, un radical cyclohexane-bis-méthylène-1,3, un radical norbornane-bis-méthylène-2(3),5(6), un radical tricyclo-[5,2,1,$0^{2,6}$]décane-bis-méthylène-3(4),8(9), un radical méthylène-2 triméthyl-3,3,5 cyclopentyle ou un radical 4,4'-dicyclohexylméthane, ou encore un des groupements

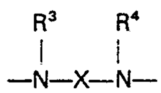 et 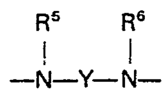

ou les deux pouvant étre remplacés par un radical pipérazinylène, ou un ou plusieurs des groupements

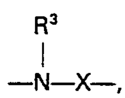, 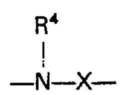 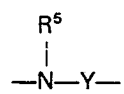 et 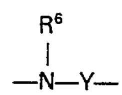

pouvant étre remplacés par des radicaux aza-monocyclo- ou -bicyclo-alklènes en $C_5$—$C_9$ qui portent au plus quatre radicaux méthyles, avec la restriction qu'au plus un des symboles X et Y puisse représenter un alkylène en $C_2$—$C_6$,

$E^1$ représente un atome de chlore ou un radical

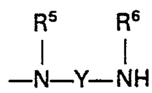 ou 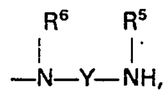,

au moins l'un des symboles $R^1$, $R^2$, $R^3$, $R^4$, $R^5$ et $R^6$ présents dans la formule I devant représenter ou contenir un radical de formule IV procédé caractérisé en ce que:

on fait d'abord régair le chlorure de cyanuryle avec de 0,95 à 1,05 fois la quantité molaire d'une amine répondant à la formule VI

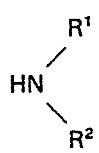

VI

dans laquelle $R^1$ et $R^2$ ont les significations données, à une température de 0 à 40°C,

puis on fait réagir les produits ainsi obtenus avec de 0,45 à 0,55 frois la quantité molaire d'une diamine répondant à la formule VII

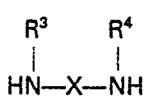

VII

dans laquelle $R^3$, X et $R^4$ on les significations données,

et ensuite on fait réagir les triazines obtenues avec de 0,95 à 1,5 fois la quantité molaire d'une diamine répondant à la formule VIII

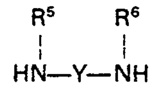

VIII

dans laquelle $R^5$, Y et $R^6$ on les significations précédemment données, à une température de 70 à 200°C,

tous les stades du procédé étant exécutés dans des solvants organiques inertes et en présence d'une base minérale utilisée en une quantité équivalente par rapport à l'amine mise en jeu, et les diverses étapes réactionnelles pouvant également être exécutées sans isolement des corps intermédiaires.

2. Application des composés obtenus selon la revendication 1 pour la stabilisation de polymères synthétiques.

3. Application selon la revendication 2 caractérisée en ce que les polymeres sont des polyoléfines.

4. Application selon la revendication 2 caractérisée en ce que les polymères sont des polyacrylates, des polyméthacrylates ou des homo- ou copolymères du styrène.

5. Procédé pour stabiliser des polymères synthétiques contre les effets destructeurs de la lumière, procédé caractérisé en ce qu'on ajoute aux polymères, éventuellement en plus de composés connus à action stabilisante, de 0,01 à 5% en poids, par rapport aux polymères, d'un composé selon la revendication 1.

6. Polymères synthétiques stabilisés contre les effets destructeurs des rayons ultraviolets, polymères qui continnent de 0,01 à 5% en poids, par rapport aux polymères, d'un composé selon la revendication 1.